# EUROPEAN PATENT SPECIFICATION

(11) **EP 1 344 955 B1**
(45) Date of publication and mention of the grant of the patent: **11.01.2006**
(21) Application number: 03005116.3
(22) Date of filing: 07.03.2003
(51) Int. Cl.: F16D 66/02, F16D 65/097

(54) **Vehicle brake pad**
Bremsbelag
Plaquette de frein

(30) Priority: 12.03.2002 IT TO20020051 U
(43) Date of publication of application: 17.09.2003
(73) Proprietor: I.C.P. S.r.l., 14020 Piova' Massaia (IT)
(72) Inventor: Razzano, Tancredi, 14020 Piova'Massaia (IT)
(74) Representative: Cerbaro, Elena

(56) References cited:
- EP-A- 1 035 345
- DE-A- 1 928 722
- DE-A- 19 603 869
- US-A- 5 816 370

## Description

The present invention relates to a vehicle brake pad.

As is known, a vehicle brake pad comprises a supporting plate; and a block of friction material fitted to the supporting plate, and the thickness of which is determined by a wear detector comprising a detecting end portion maintained in a fixed position with respect to the block of friction material. In some cases, the detecting end portion is housed and bonded inside a dead hole formed in the block of friction material.

Using adhesives makes known brake pads of the type described above unsatisfactory, mainly on account of the extreme sensitivity of the bonded connection to variations in temperature, which frequently results in the detecting end portion shifting from its original assembly position, and so impairing detection, at times completely. Moreover, adhesives need drying, thus increasing production time.

DE 196 03 869 A1 discloses a vehicle brake pad, in which a noise suppression plate supports a wear detector for detecting wear of a block of friction material of the brake pad. US 5,816,370 discloses a disc brake lining, in which a noise damping plate is secured to a mounting plate by screw or rivets.

It is an object of the present invention to provide a brake pad designed to provide a straightforward, low-cost solution to the above problems, and which, in particular, provides for fast, easy, accurate, and, above all, stable connection of the detector.

According to the present invention, there is provided a vehicle brake pad as claimed in Claim 1.

A non-limiting embodiment of the invention will be described by way of example with reference to the accompanying drawings, in which:
Figure 1 shows a partly sectioned view of a preferred embodiment of the brake pad and wear detector in accordance with the teachings of the present invention;
Figure 2 shows a larger-scale section along line II-II in Figure 1;
Figure 3 shows a larger-scale view in perspective of a variation of a detail in Figure 1;
Figure 4 is similar to, and shows a variation of the detail in, Figure 3.

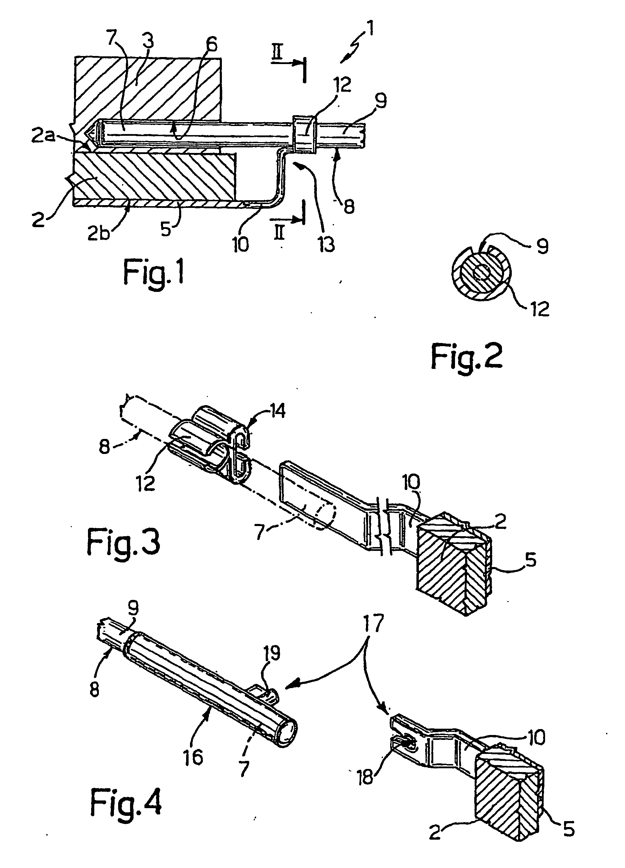

Number 1 in Figure 1 indicates as a whole a brake pad for assembly to a brake unit (not shown). Pad 1 comprises a metal supporting plate 2 connected to a support of the brake unit; a block 3 of friction material connected integrally to an extensive surface 2a of plate 2; and a noise-suppression plate 5 riveted or bonded to the surface 2b of plate 2 opposite surface 2a, after painting plate 2. In the example described, block 3 has a dead hole 6 extending parallel to surfaces 2a, 2b, and housing a detecting end portion 7 of a wear detector 8 having a cable 9.

With reference to Figure 1, portion 7 is retained inside hole 6 by a supporting bracket 10, which is formed in one piece with noise-suppression plate 5, projects from plate 5, and is fitted integrally with a split crimping collar 12 partly surrounding and deformed permanently about cable 9 (Figures 2 and 3). Noise-suppression plate 5, bracket 10, and collar 12 form part of a single one-piece metal body 13. Alternatively, bracket 10, together with collar 12, is separate from and connected to noise-suppression plate 5 by welding, riveting, or other equivalent joining means; for which purpose, noise-suppression plate 5 may comprise a straightforward appendix, to which the bracket is connected.

In the Figure 3 embodiment collar 12 is separate from bracket 10 and fitted with an open-loop connecting portion 14, which partly surrounds and is deformed onto bracket 10 in known manner to join the two together. Alternatively, in a variation not shown, connecting portion 14 is substantially flat and riveted or spot-welded to bracket 10.

In the Figure 4 variation, detecting end portion 7 comprises a cap 16, which is co-molded or bonded to the end portion of cable 9, extends partly outside hole 6, and is connected to bracket 10 by a releasable, conveniently click-on, connecting device 17. In the example described, device 17 comprises a keyhole seat 18 formed on bracket 10, and extending crosswise to plates 2 and 5 and perpendicularly to the axis of hole 6; and a cylindrical-headed member 19 located on the portion of cap 16 outside hole 6, and which clicks inside seat 18 when cap 16 is inserted inside hole 6. Cylindrical-headed member 19 is preferably formed in one piece with cap 16, but may be separate from the cap and simply crimped to cap 16 or directly to cable 9.

Providing a bracket integral with the noise-suppression plate, and using the bracket to retain the detecting portion inside the block of friction material, therefore eliminates the need for adhesives inside the block of friction material, and so enables connection of the wear detector to the pad which is both stable and, above all, insensitive to variations in the temperature of the block.

By crimping the cable to the bracket or providing a releasable, or at any rate easily removable, connecting device, as for example in the case of riveting, the wear detector can be changed quickly by releasing the detecting portion from the noise-suppression plate, withdrawing it from the dead hole, and inserting a new one.

At any rate, connecting the wear detector to the noise-suppression plate greatly simplifies manufacture of the brake pad, and enables acceptable-looking pads to be produced extremely quickly and cheaply. Supporting plate 2, in fact, can be painted and finished as soon as it is fitted with the friction material. Connecting noise-suppression plate 5 to supporting plate 2 involves no change in the look or structure of supporting plate 2, since the noise-suppression plate is bonded or riveted. As regards production time, it should be pointed out that, in the event an appendix for connecting the detector is formed in one piece with the noise-suppression plate, the pad comprises the same number of component parts as known solutions.

Clearly, changes may be made to pad 1 and detector 8 as described herein without, however, departing from the scope of the present invention. In particular, bracket 10 may be shaped and sized and connected to the noise-suppression plate otherwise than as described by way of example; and detector 8 may also be connected to bracket 10 otherwise than as shown.

## Claims

1. A vehicle brake pad (1) comprising a metal supporting plate (2) connected to a braking member; a block (3) of friction material connected integrally to an extensive surface (2a) of said supporting plate (2); and a noise-suppression plate (5) fitted to a surface (2b) of said supporting plate (2) opposite the one fitted with said block (3) of friction material; said noise-suppression plate (5) comprising connecting means (10; 12; 18) connectable to a further connecting means (9; 10; 19) carried by a wear detector (8) for detecting wear of said block (3) of friction material;
**characterized in that** said connecting means comprises at least one connecting portion (10) projecting from said noise-suppression plate (5) and connected integrally to the noise-suppression plate (5).

2. A pad as claimed in Claim 1, **characterized in that** said connecting means (10, 12) and said noise-suppression plate (5) form part of a one-piece body (13).

3. A pad as claimed in Claim 1, **characterized in that** said connecting portion (10) and said noise-suppression plate (5) form part of a one-piece body (13).

4. A pad as claimed in claim 1, **characterized in that** said connecting means comprise releasable connecting means (14; 17) interposed between said connecting portion (10) and said wear detector (8).

5. A pad as claimed in Claim 4, **characterized in that** said releasable connecting means (17) are click-on connecting means.

6. A pad as claimed in Claim 4 or 5, **characterized in that** said wear detector (8) comprises a detecting end portion (7) insertable inside a cavity (6) in said block (3) of friction material; said releasable connecting means (17) comprising a first (18) and a second (19) connecting member, which engage mutually as said detecting end portion (7) is inserted inside said cavity (6).

7. A pad as claimed in any one of the foregoing Claims, **characterized in that** said connecting means comprise crimping means (12) for keeping an electric cable (9) of said wear detector (8) in a fixed position with respect to said block (3) of friction material.

8. A pad as claimed in any one of the foregoing Claims, **characterized in that** said connecting means comprise a cap (16) molded or bonded at least onto an end portion of an electric cable (9) of said wear detector (8).

## Patentansprüche

1. Fahrzeug-Bremsklotz (1), mit einer Metallträgerplatte (2), die mit einem Bremselement verbunden ist; einem Block (3) aus einem Reibmaterial, der mit einer äußeren Oberfläche (2a) der Trägerplatte (2) einteilig verbunden ist; und einer Geräuschunterdrückungsplatte (5), die an einer Oberfläche (2b) der Trägerplatte (2) gegenüber jener Oberfläche angebracht ist, an der der Block (3) aus Reibmaterial angebracht ist; wobei die Geräuschunterdrückungsplatte (5) Verbindungsmittel (10; 12; 18) umfasst, die mit weiteren Verbindungsmitteln (9; 10; 19) verbunden sind, die ein Verschleißdetektor (8) trägt, der den Verschleiß des Blocks (3) aus Reibmaterial erfasst;
**dadurch gekennzeichnet, dass** die Verbindungsmittel wenigstens einen Verbindungsabschnitt (10) umfassen, der von der Geräuschunterdrückungsplatte (5) vorsteht und mit der Geräuschunterdrückungsplatte (5) einteilig verbunden ist.

2. Klotz nach Anspruch 1, **dadurch gekennzeichnet, dass** die Verbindungsmittel (10, 12) und die Geräuschunterdrückungsplatte (5) einen Teil eines einteiligen Körpers (13) bilden.

3. Klotz nach Anspruch 1, **dadurch gekennzeichnet, dass** der Verbindungsabschnitt (10) und die Geräuschunterdrückungsplatte (5) einen Teil eines einteiligen Körpers (13) bilden.

4. Klotz nach Anspruch 1, **dadurch gekennzeichnet, dass** die Verbindungsmittel lösbare Verbindungsmittel (14; 17) umfassen, die zwischen den Verbindungsabschnitt (10) und den Verschleißdetektor (8) eingefügt sind.

5. Klotz nach Anspruch 4, **dadurch gekennzeichnet, dass** die lösbaren Verbindungsmittel (17) Einrast-Verbindungsmittel sind.

6. Klotz nach Anspruch 4 oder 5, **dadurch gekennzeichnet, dass** der Verschleißdetektor (8) einen Erfassungsendabschnitt (7) umfasst, der in einen Hohlraum (6) in dem Block (3) aus Reibmaterial einschiebbar ist; wobei die lösbaren Verbindungsmittel (17) ein erstes (18) und ein zweites (19) Verbindungselement umfassen, die in gegenseitigem Eingriff sind, wenn der Erfassungsendabschnitt (7) in den Hohlraum (6) eingeschoben ist.

7. Klotz nach einem der vorhergehenden Ansprüche, **dadurch gekennzeichnet, dass** die Verbindungsmittel Umschlagmittel (12) umfassen, um ein elektrisches Kabel (9) des Verschleißdetektors (8) an einer festen Position in Bezug auf den Block (3) aus Reibmaterial zu halten.

8. Klotz nach einem der vorhergehenden Ansprüche, **dadurch gekennzeichnet, dass** die Verbindungsmittel eine Kappe (16) umfassen, die wenigstens auf einen Endabschnitt eines elektrischen Kabels (9) des Verschleißdetektors (8) gegossen oder geklebt ist.

## Revendications

1. Patin de frein de véhicule (1) comprenant une plaque de support métallique (2) reliée à un élément de freinage, un bloc (3) de matériau de friction relié de façon solidaire à une surface étendue (2a) de ladite plaque de support (2) et une plaque de suppression de bruit (5) logée sur une surface (2b) de ladite plaque de support (2) à l'opposé de celle logée dans ledit bloc (3) du matériau de friction, ladite plaque de suppression de bruit (5) comprenant des moyens de liaison (10, 12, 18) aptes à être reliés à un autre moyen de liaison (9, 14, 19) supporté par un détecteur d'usure (8) pour détecter l'usure dudit bloc (3) du matériau de friction ;
**caractérisé en ce que** ledit moyen de liaison comprend au moins une partie de liaison (10) faisant saillie à partir de ladite plaque de suppression de bruit (5) et reliée de façon solidaire à la plaque de suppression de bruit (5).

2. Patin selon la revendication 1, **caractérisé en ce que** ledit moyen de liaison (10, 12) et ladite plaque de suppression de bruit (5) forment une partie d'un corps en une seule pièce (13).

3. Patin selon la revendication 1, **caractérisé en ce que** ladite partie de liaison (10) et ladite plaque de suppression de bruit (5) forment une partie d'un corps en une seule pièce (13).

4. Patin selon la revendication 1, **caractérisé en ce que** lesdits moyens de liaison comportent un moyen de liaison libérable (14, 17) interposé entre ladite partie de liaison (10) et ledit détecteur d'usure (8).

5. Patin selon la revendication 4, **caractérisé en ce que** lesdits moyens de liaison libérables (17) sont des moyens de liaison encliquetés.

6. Patin selon la revendication 4 ou 5, **caractérisé en ce que** ledit détecteur d'usure (8) comprend une partie d'extrémité de détection (7) apte à être insérée à l'intérieur d'une cavité (6) dans ledit bloc (3) du matériau de friction, lesdits moyens de liaison libérables (17) comportant un premier (18) et un second (19) éléments de liaison qui viennent en prise mutuellement lorsque ladite partie d'extrémité de détection (7) est insérée à l'intérieur de ladite cavité (6).

7. Patin selon l'une quelconque des revendications précédentes, **caractérisé en ce que** lesdits moyens de liaison comportent un moyen de sertissage (12) pour maintenir un câble électrique (9) dudit détecteur d'usure (8) dans une position fixe par rapport audit bloc (3) du matériau de friction.

8. Patin selon l'une quelconque des revendications précédentes, **caractérisé en ce que** lesdits moyens de liaison comportent un capuchon (16) moulé ou relié au moins sur une partie d'extrémité d'un câble électrique (9) dudit détecteur d'usure (8).
